# EUROPEAN PATENT APPLICATION

(11) **EP 3 911 099 A1**
(43) Date of publication of application: **17.11.2021**
(21) Application number: 19909607.4
(22) Date of filing: 11.01.2019
(51) Int. Cl.: H04W 72/14

(54) **USER TERMINAL AND WIRELESS COMMUNICATION METHOD**

(71) Applicant: NTT DOCOMO, INC., Chiyoda-Ku Tokyo 100-6150 (JP)
(72) Inventor: TAKEDA, Kazuki, Tokyo 100-6150 (JP); NAGATA, Satoshi, Tokyo 100-6150 (JP); WANG, Lihui, Beijing 100190 (CN)
(74) Representative: Hoffmann Eitle
(86) International application number: PCT/JP2019/000792
(87) International publication number: WO 2020/144870

(57) **Abstract**

A user terminal includes: a receiving section that receives a higher-layer parameter for first-type configured grant-based transmission, the higher-layer parameter being configured independently from a higher-layer parameter for dynamic grant-based transmission; and a control section that controls the first-type configured grant-based transmission, based on the higher-layer parameter for the first-type configured grant-based transmission.

## Description

### Technical Field

The present disclosure relates to a user terminal and a radio communication method in next-generation mobile communication systems.

### Background Art

In UMTS (Universal Mobile Telecommunications System) networks, the specifications of LTE (Long-Term Evolution) have been drafted for the purpose of further increasing high speed data rates, providing lower latency and so on (see Non-Patent Literature 1). In addition, for the purpose of further high capacity, advancement and the like of the LTE (3GPP (Third Generation Partnership Project) Rel. (Release) 8 and Rel. 9), the specifications of LTE-Advanced (3GPP Rel. 10 to Rel. 14) have been drafted.

Successor systems of LTE (e.g., referred to as "5th generation mobile communication system)," "5G+ (plus)," "NR (New Radio)," "3GPP Release (Rel.) 15 (or later versions)," and so on) are also under study.

### Citation List

### Non-Patent Literature

Non-Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)," April, 2010

### Summary of Invention

### Technical Problem

For a future radio communication system (for example, NR), transmission through an uplink shared channel (for example, a PUSCH (Physical Uplink Shared Channel)) using dynamic grant (also referred to as, for example, dynamic grant-based transmission) and transmission through an uplink shared channel using configured grant (also referred to as, for example, configured grant-based transmission) have been discussed.

However, when a user terminal (for example, User Equipment (UE)) supports both the dynamic grant-based transmission and the configured grant-based transmission, constraints on configuration of higher-layer parameters potentially prevent appropriate control of the configured grant-based transmission (also referred to as, for example, configured grant type 1 transmission or first-type configured grant-based transmission to be described later).

Thus, an object of the present disclosure is to provide a user terminal and a radio communication method that are capable of appropriately controlling configured grant-based transmission. Solution to Problem

A user terminal according to an aspect of the present disclosure includes: a receiving section that receives a higher-layer parameter for first-type configured grant-based transmission, the higher-layer parameter being configured independently from a higher-layer parameter for dynamic grant-based transmission; and a control section that controls the first-type configured grant-based transmission, based on the higher-layer parameter for the first-type configured grant-based transmission.

### Advantageous Effects of Invention

According to aspect of the present disclosure, it is possible to appropriately control configured grant-based transmission.

### Brief Description of Drawings

FIGS. 1A and 1B are diagrams to show an example of DCI;
FIGS. 2A and 2B are diagrams to show an example of higher-layer parameters according to a first aspect;
FIG. 3 is a diagram to show an example of a schematic structure of a radio communication system according to one embodiment;
FIG. 4 is a diagram to show an example of the structure of a base station according to one embodiment;
FIG. 5 is a diagram to show an example of the structure of a user terminal according to one embodiment; and
FIG. 6 is a diagram to show an example of hardware structures of the base station and the user terminal according to one embodiment.

### Description of Embodiments

### <Dynamic Grant-Based Transmission and Configured Grant-Based Transmission (Type 1 and Type 2)>

For NR, dynamic grant-based transmission and configured grant-based transmission have been discussed.

The dynamic grant-based transmission is UL transmission using an uplink shared channel (for example, a PUSCH (Physical Uplink Shared Channel)) based on downlink control information (DCI) (UL grant) or is DL transmission using a downlink shared channel (for example, a PDSCH (Physical Downlink Shared Channel)) based on DCI (DL assignment).

Dynamic grant-based parameters (which may be referred to as, for example, dynamic grant-based transmission parameters or dynamic grant parameters) may be indicated for UE by using DCI and higher-layer parameters.

For example, the dynamic grant parameters may be configured by using at least one of PUSCH configuration information (for example, a RRC control element "pusch-Config") or DCI (CRC-scrambled DCI) which includes CRC (Cyclic Redundancy Check) bits scrambled by a specific RNTI (for example, a C-RNTI (Cell-Radio Network Temporary Identifier) or to which the CRC bits are added).

The PUSCH configuration information may include information related to at least one of an identifier (dataScramblingIdentityPUSCH) used for scrambling of initial data of PUSCH, a transmission configuration (for example, codebook base or non-codebook base), a codebook subset, a maximum rank, information related to UCI on PUSCH, and information **(*p-pi2BPSK*)** related to a modulation scheme applied in transform precoding.

The configured grant-based transmission is UL transmission using an uplink shared channel (for example, PUSCH) based on configuration information (which may be referred to as, for example, configured grant or configured UL grant) configured by a higher layer or is DL transmission using a downlink shared channel (for example, PDSCH) based on configuration information (for example, sps-config) configured by a higher layer.

In the configured grant-based transmission, UL resources are already allocated to the UE so that the UE can autonomously perform UL transmission by using configured resources, and thus low-latency communication is expected to be achieved.

The dynamic grant-based transmission may be referred to as, for example, dynamic grant-based PUSCH, UL transmission with dynamic grant, PUSCH with dynamic grant, UL transmission with UL grant, UL grant-based transmission, or UL transmission scheduled (or for which transmission resources are configured) by dynamic grant.

The configured grant-based transmission may be referred to as, for example, configured grant-based PUSCH, UL transmission with configured grant, PUSCH with configured grant, UL transmission without UL grant, UL grant-free transmission, or UL transmission scheduled (or for which transmission resources are configured) by configured grant.

Configured grant-based DL transmission may also be referred to as semi-persistent scheduling (SPS). Configured grant-based UL transmission may also be referred to as UL SPS. In the present disclosure, "configured grant" may be interchangeably interpreted as "SPS," "SPS/configured grant," and so on.

Several types (such as type 1 and type 2) of the configured grant-based transmission have been discussed.

Parameters for configured grant type 1 transmission (type 1 configured grant) (which may be referred to as, for example, configured grant-based transmission parameters, configured grant parameters, or type 1 configured grant parameters) may configured to the UE by using higher-layer parameters without using downlink control information (DCI).

For example, the type 1 configured grant parameters may be configured by using at least one of configured grant configuration information (for example, RRC information element *"ConfiguredGrantConfig")* and the above-described PUSCH configuration information (for example, the RRC control element "pusch-Config").

Configured grant configuration information for type 1 may include configured uplink grant (for example, a RRC control element "rrc-ConfiguredUplinkGrant"). The configured grant configuration information may include, for example, information related to at least one of frequency hopping, a demodulation reference signal (DMRS), a modulation coding scheme (MCS) table, whether transform precoding is applied, the number of HARQ processes, the number of times of repetition, a redundancy version (RV) sequence used in repetitive transmission, and a period.

The configured uplink grant may include, for example, information related to at least one of a time-domain offset, time-domain allocation, frequency domain allocation, an antenna port, DMRS initialization, an SRS (Sounding Reference Signal) resource identifier, an MCS, a transport block size, a frequency hopping offset, and a path-loss reference index.

Parameters for configured grant type 2 transmission (type 2 configured grant) (which may be referred to as, for example, configured grant-based transmission parameters, configured grant parameters, or type 2 configured grant parameters) may be indicated for the UE by using DCI and higher-layer parameters.

For example, the type 2 configured grant parameters may be configured by using at least one of configured grant configuration information (for example, the RRC information element *"ConfiguredGrantConfig"),* the above-described PUSCH configuration information (for example, the RRC control element "pusch-Config"), and DCI CRC-scrambled by a specific RNTI (for example, a CS-RNTI (Configured Scheduling Radio Network Temporary Identifier)).

Configured grant configuration information for type 2 may be same as the configured grant configuration information for type 1 except that the configured grant configuration information for type 2 does not include configured uplink grant (for example, the RRC control element "rrc-ConfiguredUplinkGrant"). At least one of pieces of information included in the configured uplink grant may be included in DCI scrambled by a specific RNTI (for example, the CS-RNTI). For example, any parameter other than an RRC control element "rrc-ConfiguredUplinkGrant" in the RRC information element *"ConfiguredGrantConfig"* may be shared between the configured grant type 1 transmission and the configured grant type 2 transmission.

When one or a plurality of pieces of configured grant configuration information for type 1 are configured, the UE may determine that one or a plurality of configured grant type 2 transmissions are triggered. The UE may control PUSCH transmission without dynamic grant by using resources (which may be referred to as, for example, configured grant resources or transmission occasions) configured by the configured grant configuration information for type 1. Note that, when the configured grant-based transmission is configured but there is no data in a transmission buffer, the UE may skip the configured grant-based transmission.

When one or a plurality of pieces of configured grant configuration information for type 2 are configured and activation DCI is received, the UE may determine that one or a plurality of configured grant types 2 are triggered or activated. The activation DCI may be DCI (for example, of DCI format 0_0 or 0 1) scrambled by a specific RNTI (for example, the CS-RNTI). The DCI may be used for control of, for example, configured grant deactivation or retransmission.

For example, when activation DCI of configured grant type 2 is received, the UE may control PUSCH transmission by using resources indicated by configured grant configuration information for type 2 and parameters in the activation DCI (for example, at least one of a time-domain offset, time-domain allocation, frequency domain allocation, an antenna port, DMRS initialization, an SRS resource identifier, an MCS, a transport block size, a frequency hopping offset, and a path-loss reference index).

The UE may perform releasing (which may be referred to as, for example, deactivation) of resources (PUSCH) corresponding to the configured grant type 2 transmission based on DCI for deactivation for the configured grant type 2 transmission or expiration of a given timer (elapse of a given time). Note that, when the configured grant type 2 transmission is activated (is in an active state) but there is no data in a transmission buffer, the UE may skip the configured grant-based transmission.

As described above, the dynamic grant-based transmission is controlled by using higher-layer parameters (for example, the above-described PUSCH configuration information) and DCI (for example, DCI format 0_0 or 0_1 CRC-scrambled by the C-RNTI).

The configured grant type 1 transmission is controlled by using higher-layer parameters (for example, the configured grant configuration information including configured uplink grant or the PUSCH configuration information) without using DCI. On the other hand, the configured grant type 2 transmission is controlled by using higher-layer parameters (for example, the above-described configured grant configuration information not including configured uplink grant and the above-described PUSCH configuration information) and DCI (for example, having DCI format 0_0 or 0_1 and CRC-scrambled by the CS-RNTI).

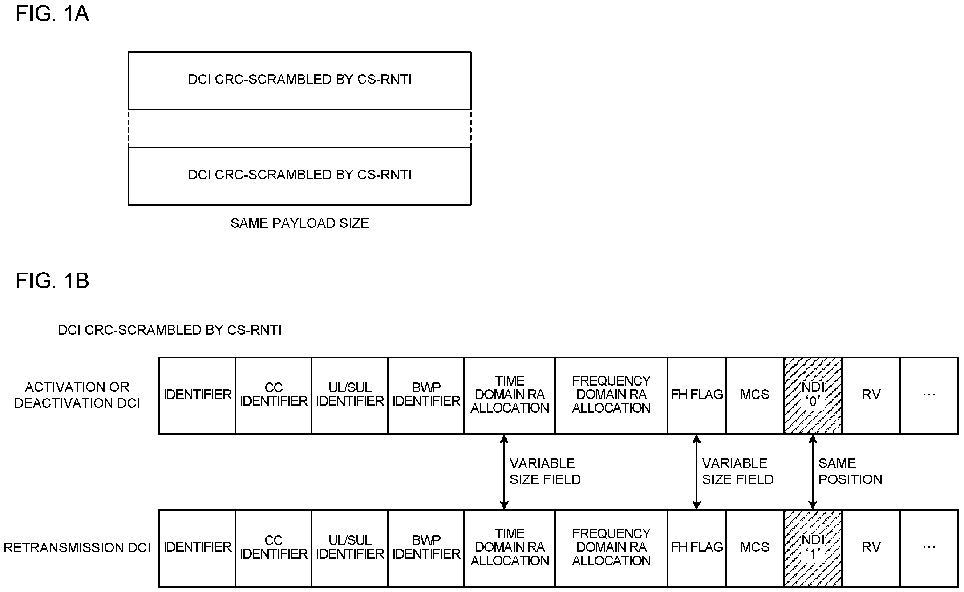

It has been discussed that the size of DCI (for example, DCI CRC-scrambled by the C-RNTI) used in the dynamic grant-based transmission and the size of DCI (for example, DCI CRC-scrambled by the CS-RNTI) used in the configured grant-based transmission are same (for example, FIG. 1A).

In addition, it has been discussed that an NDI (New Data Indicator) (value of the NDI) in DCI CRC-scrambled by the CS-RNTI is used for identification of activation (or deactivation) and retransmission. For example, the NDI "0" may represent activation or deactivation, and the NDI "1" may represent retransmission. In this case, it has been discussed to fix the position of the NDI in the DCI in order to allow the UE to identify activation (or deactivation) DCI or retransmission DCI, (for example, FIG. 1B).

As shown in FIG. 1B, the size (payload size or the number of bits) of DCI is variable depending on a given condition (for example, a PUSCH waveform or a resource allocation type). Specifically, the size (number of bits) of a given field (for example, a frequency domain resource allocation field) in DCI is variable. Existence or absence of a given field (for example, a frequency hopping flag field) in DCI is also variable.

In this manner, in NR, it is requested that a plurality of pieces of DCI that has the same DCI format and is CRC-scrambled by different RNTIs (for example, the C-RNTI and the CS-RNTI) have the same size. Furthermore, it is requested that the position of a specific field (for example, an NDI field) is fixed among a plurality of pieces of DCI CRC-scrambled by a specific RNTI (for example, the CS-RNTI).

In order to satisfy such a requirement, it has been discussed to provide constraints on higher-layer parameters. For example, configured value constraints are provided on higher-layer parameters (for example, the above-described PUSCH configuration information) for the dynamic grant-based transmission and higher-layer parameters (for example, the above-described configured grant configuration information and the above-described PUSCH configuration information) for the configured grant-based transmission (the configured grant type 1 transmission and the configured grant type 2 transmission).

On the other hand, as described above, DCI is not used in the configured grant type 1 transmission unlike the configured grant type 2 transmission. Thus, the configured value constraints as described above do not need to be provided on the higher-layer parameters (for example, the above-described configured grant configuration information and the above-described PUSCH configuration information) for the configured grant type 1 transmission. Otherwise, the configured value constraints potentially prevent flexible control of the configured grant type 1 transmission.

When the above-described requirements on the size of DCI and the position of a specific field are satisfied for the dynamic grant-based transmission and the configured grant type 2 transmission, the UE can appropriately control the dynamic grant-based transmission and the configured grant type 2 transmission without providing constraints on the configured value of the higher-layer parameters for the configured grant type 1 transmission.

Thus, the inventors of the present invention came up with the idea of appropriately controlling the configured grant-based transmission by changing at least one of a constraint condition on higher-layer configuration and configuration parameters based on the type of the configured grant-based transmission.

Embodiments according to the present disclosure will be described below in detail with reference to the accompanying drawings. Note that characteristics of at least one of first to third aspects are applicable in combination. In the present embodiment, "one or more" may be any of "one" and "a plurality of."

### (First Aspect)

In a first aspect, configuration of the higher-layer parameters for the configured grant-based transmission may be controlled based on the type of the configured grant-based transmission.

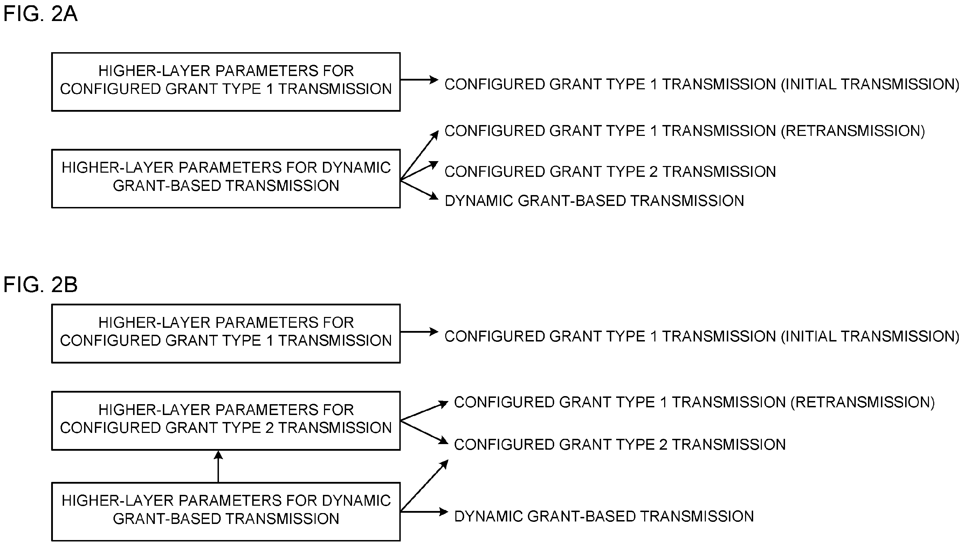

Specifically, the higher-layer parameters for the configured grant type 1 transmission (first-type configured grant-based transmission) may be configured not based on (not in accordance with, in no relation to, independently from, or separately from) the higher-layer parameters (for example, parameters in the above-described PUSCH configuration information) for the dynamic grant-based transmission (for example, FIGS. 2A and 2B).

The higher-layer parameters for the configured grant type 1 transmission may include, for example, at least one of piece of information in the above-described configured grant configuration information for type 1 (for example, the RRC information element *"ConfiguredGrantConfig").* The higher-layer parameters for the configured grant type 1 transmission may include, for example, at least one of piece of information in the above-described PUSCH configuration information (for example, the RRC control element "pusch-Config").

On the other hand, the higher-layer parameters for the configured grant type 2 transmission (second-type configured grant-based transmission) may be configured based on (in accordance with, in relation to, including, or identical to) the higher-layer parameters (for example, parameters in the above-described PUSCH configuration information) for the dynamic grant-based transmission.

In this case, as shown in FIG. 2A, no higher-layer parameters for the configured grant type 2 transmission are configured, and higher-layer parameters for dynamic grant type transmission may be used for the configured grant type 2 transmission (may be referred to as the higher-layer parameters for the configured grant type 2 transmission).

Alternatively, as shown in FIG. 2B, the higher-layer parameters for the configured grant type 2 transmission may be configured to the UE separately from the higher-layer parameters for the dynamic grant type transmission. In this case, the configured values of at least some of the higher-layer parameters for the configured grant type 2 transmission may be based on (for example, may be identical to) the configured values of the higher-layer parameters for the dynamic grant type transmission.

The higher-layer parameters for the configured grant type 2 transmission may include, for example, at least one piece of information in the above-described configured grant configuration information for type 2 (for example, the RRC information element *"ConfiguredGrantConfig").* The higher-layer parameters for the configured grant type 2 transmission may include, for example, at least one piece of information in the above-described PUSCH configuration information (for example, the RRC control element "pusch-Config"). As described with reference to FIG. 2A, the higher-layer parameters for the dynamic grant-based transmission may be referred to as the higher-layer parameters for the configured grant type 2 transmission.

Note that each higher-layer parameter for the configured grant type 2 transmission, which is configured based on the higher-layer parameters for the dynamic grant-based transmission may be a parameter that affects at least one of the size of DCI and the position of the above-described specific field (for example, for the NDI). The parameter may be, for example, at least one of a parameter for configuring whether cross-carrier scheduling is employed, a parameter for configuring a supplemental uplink (SUL) carrier, a parameter for configuring PUSCH frequency resource allocation type (type 1, type 2, or dynamic switching between types 1 and 2), a parameter for configuring whether PUSCH frequency hopping is employed, and so on.

The UE may determine a higher-layer parameter to be used, based on whether the configured grant-based transmission is initial transmission or retransmission (whether the configured grant-based transmission is initial transmission or whether the configured grant-based transmission is retransmission).

For example, the UE may control initial transmission of the configured grant type 1 transmission based on higher-layer parameters for configured grant type 1, which are configured separately from higher-layer parameters (for example, the RRC control element "pusch-Config") for dynamic grant base (for example, FIGS. 2A and 2B).

On the other hand, the UE may control retransmission of the configured grant type 1 transmission based on the higher-layer parameters (for example, the RRC control element "pusch-Config") for the dynamic grant base (for example, FIG. 2A) or based on the higher-layer parameters for the configured grant type 2 transmission (for example, FIG. 2B).

The UE may control at least one of initial transmission and retransmission of the configured grant type 2 transmission based on the higher-layer parameters (for example, at least one parameter in the RRC control element "pusch-Config") for the dynamic grant base.

Specifically, the UE may control at least one of initial transmission and retransmission of the configured grant type 2 transmission based on the higher-layer parameters (for example, at least one parameter in the RRC control element "pusch-Config") for the dynamic grant base (by reusing the value of the higher-layer parameters) irrespective of whether the higher-layer parameters affect the size of DCI or the position of the above-described specific field (for example, for the NDI) (for example, FIG. 2A).

Alternatively, the UE may change a parameter used for at least one of initial transmission and retransmission of the configured grant type 2 transmission, based on whether the parameter affects the size of DCI or the position of the above-described specific field (for example, for the NDI).

For example, as for a parameter that does not affect the size of DCI or the position of the above-described specific field (for example, for the NDI), the UE may control at least one of initial transmission and retransmission of the configured grant type 2 transmission by using each higher-layer parameter individually configured for the configured grant type 2 transmission (for example, FIG. 2B).

On the other hand, as for a parameter that affects the size of DCI or the position of the above-described specific field (for example, for the NDI), the UE may control at least one of initial transmission and retransmission of the configured grant type 2 transmission by reusing the value of each higher-layer parameter (for example, at least one parameter in the RRC control element "pusch-Config") for the dynamic grant base (for example, FIG. 2B).

Alternatively, the value of each higher-layer parameter individually configured for the configured grant type 2 transmission may be identical to the value of the higher-layer parameter (for example, at least one parameter in the RRC control element "pusch-Config") for the dynamic grant base. In this case, the UE may control at least one of initial transmission and retransmission of the configured grant type 2 transmission by using each higher-layer parameter individually configured for the configured grant type 2 transmission.

In a case of retransmission scheduled by DCI (for example, DCI CRC-scrambled by the CS-RNTI), the UE may control the retransmission based on the higher-layer parameters (for example, at least one parameter in the RRC control element "pusch-Config") for the dynamic grant base irrespective of the type of the configured grant-based transmission.

Note that the position of a specific field (for example, for the NDI) may be unfixed for DCI that schedules retransmission of the configured grant type 1 transmission. This is because DCI for activation or deactivation is not used in the configured grant type 1 transmission and thus whether DCI is for retransmission does not need to be identified by the NDI.

### (Radio Communication System)

Hereinafter, a structure of a radio communication system according to one embodiment of the present disclosure will be described. In this radio communication system, the radio communication method according to each embodiment of the present disclosure described above may be used alone or may be used in combination for communication.

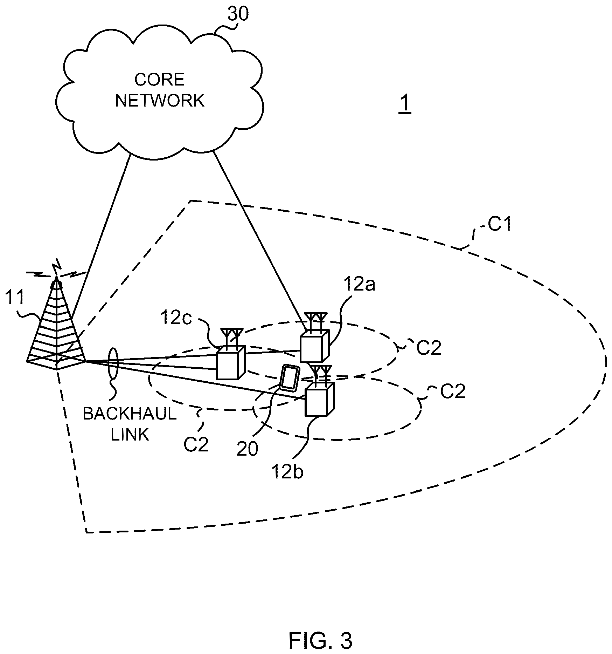

FIG. 3 is a diagram to show an example of a schematic structure of the radio communication system according to one embodiment. The radio communication system 1 may be a system implementing a communication using LTE (Long Term Evolution), 5G NR (5th generation mobile communication system New Radio) and so on the specifications of which have been drafted by 3GPP (Third Generation Partnership Project).

The radio communication system 1 may support dual connectivity (multi-RAT dual connectivity (MR-DC)) between a plurality of RATs (Radio Access Technologies). The MR-DC may include dual connectivity (EN-DC (E-UTRA-NR Dual Connectivity)) between LTE (E-UTRA (Evolved Universal Terrestrial Radio Access)) and NR, dual connectivity (NE-DC (NR-E-UTRA Dual Connectivity)) between NR and LTE, and so on.

In EN-DC, a base station (eNB) of LTE (E-UTRA) is a master node (MN), and a base station (gNB) of NR is a secondary node (SN). In NE-DC, a base station (gNB) of NR is an MN, and a base station (eNB) of LTE (E-UTRA) is an SN.

The radio communication system 1 may support dual connectivity between a plurality of base stations in the same RAT (for example, dual connectivity (NN-DC (NR-NR Dual Connectivity)) where both of an MN and an SN are base stations (gNB) of NR).

The radio communication system 1 may include a base station 11 that forms a macro cell C1 of a relatively wide coverage, and base stations 12 (12a to 12c) that form small cells C2, which are placed within the macro cell C1 and which are narrower than the macro cell C1. The user terminal 20 may be located in at least one cell. The arrangement, the number, and the like of each cell and user terminal 20 are by no means limited to the aspect shown in the diagram. Hereinafter, the base stations 11 and 12 will be collectively referred to as "base stations 10," unless specified otherwise.

The user terminal 20 may be connected to at least one of the plurality of base stations 10. The user terminal 20 may use at least one of carrier aggregation and dual connectivity (DC) using a plurality of component carriers (CCs).

Each CC may be included in at least one of a first frequency band (FR1 (Frequency Range 1)) and a second frequency band (FR2 (Frequency Range 2)). The macro cell C1 may be included in FR1, and the small cells C2 may be included in FR2. For example, FR1 may be a frequency band of 6GHz or less (sub-6GHz), and FR2 may be a frequency band which is higher than 24GHz (above-24GHz). Note that frequency bands, definitions and so on of FR1 and FR2 are by no means limited to these, and for example, FR1 may correspond to a frequency band which is higher than FR2.

The user terminal 20 may communicate using at least one of time division duplex (TDD) and frequency division duplex (FDD) in each CC.

The plurality of base stations 10 may be connected by a wired connection (for example, optical fiber in compliance with the CPRI (Common Public Radio Interface), the X2 interface and so on) or a wireless connection (for example, an NR communication). For example, if an NR communication is used as a backhaul between the base stations 11 and 12, the base station 11 corresponding to a higher station may be referred to as an "IAB (Integrated Access Backhaul) donor," and the base station 12 corresponding to a relay station (relay) may be referred to as an "IAB node."

The base station 10 may be connected to a core network 30 through another base station 10 or directly. For example, the core network 30 may include at least one of EPC (Evolved Packet Core), 5GCN (5G Core Network), NGC (Next Generation Core), and so on.

The user terminal 20 may be a terminal supporting at least one of communication schemes such as LTE, LTE-A, 5G, and so on.

In the radio communication system 1, an orthogonal frequency division multiplexing (OFDM)-based wireless access scheme may be used. For example, in at least one of the downlink (DL) and the uplink (UL), CP-OFDM (Cyclic Prefix OFDM), DFT-s-OFDM (Discrete Fourier Transform Spread OFDM), OFDMA (Orthogonal Frequency Division Multiple Access), SC-FDMA (Single Carrier Frequency Division Multiple Access), and so on may be used.

The wireless access scheme may be referred to as a "waveform." Note that, in the radio communication system 1, another wireless access scheme (for example, another single carrier transmission scheme, another multi-carrier transmission scheme) may be used for a wireless access scheme in the UL and the DL.

In the radio communication system 1, a downlink shared channel (PDSCH (Physical Downlink Shared Channel), which is used by each user terminal 20 on a shared basis, a broadcast channel (PBCH (Physical Broadcast Channel)), a downlink control channel (PDCCH (Physical Downlink Control Channel)) and so on, may be used as downlink channels.

In the radio communication system 1, an uplink shared channel (PUSCH (Physical Uplink Shared Channel), which is used by each user terminal 20 on a shared basis, an uplink control channel (PUCCH (Physical Uplink Control Channel)), a random access channel (PRACH (Physical Random Access Channel)) and so on may be used as uplink channels.

User data, higher layer control information, SIBs (System Information Blocks) and so on are transmitted on the PDSCH. User data, higher layer control information and so on may be transmitted on the PUSCH. The MIBs (Master Information Blocks) may be transmitted on the PBCH.

Lower layer control information may be transmitted on the PDCCH. For example, the lower layer control information may include downlink control information (DCI) including scheduling information of at least one of the PDSCH and the PUSCH.

Note that DCI for scheduling the PDSCH may be referred to as "DL assignment," "DL DCI," and so on, and DCI for scheduling the PUSCH may be referred to as "UL grant," "UL DCI," and so on. Note that the PDSCH may be interpreted as "DL data," and the PUSCH may be interpreted as "UL data."

For detection of the PDCCH, a control resource set (CORESET) and a search space may be used. The CORESET corresponds to a resource to search DCI. The search space corresponds to a search area and a search method of PDCCH candidates. One CORESET may be associated with one or more search spaces. The UE may monitor a CORESET associated with a given search space, based on search space configuration.

One SS may correspond to a PDCCH candidate corresponding to one or more aggregation levels. One or more search spaces may be referred to as a "search space set." Note that a "search space," a "search space set," a "search space configuration," a "search space set configuration," a "CORESET," a "CORESET configuration" and so on of the present disclosure may be interchangeably interpreted.

Channel state information (CSI), transmission confirmation information (for example, which may be also referred to as HARQ-ACK (Hybrid Automatic Repeat reQuest ACKnowledgement), ACK/NACK, and so on), scheduling request (SR), and so on may be transmitted by means of the PUCCH. By means of the PRACH, random access preambles for establishing connections with cells may be transmitted.

Note that the downlink, the uplink, and so on in the present disclosure may be expressed without a term of "link." In addition, various channels may be expressed without adding "Physical" to the head.

In the radio communication system 1, a synchronization signal (SS), a downlink reference signal (DL-RS), and so on may be transmitted. In the radio communication system 1, a cell-specific reference signal (CRS), a channel state information-reference signal (CSI-RS), a demodulation reference signal (DMRS), a positioning reference signal (PRS), a phase tracking reference signal (PTRS), and so on may be transmitted as the DL-RS.

For example, the synchronization signal may be at least one of a primary synchronization signal (PSS) or a secondary synchronization signal (SSS). A signal block including an SS (PSS, SSS) and a PBCH (and a DMRS for a PBCH) may be referred to as an "SS/PBCH block," an "SSB (SS Block)," and so on. Note that an SS, an SSB, and so on may be also referred to as a "reference signal."

In the radio communication system 1, a sounding reference signal (SRS), a demodulation reference signal (DMRS), and so on may be transmitted as an uplink reference signal (UL-RS). Note that DMRS may be referred to as a "user terminal specific reference signal (UE-specific Reference Signal)."

### (Base Station)

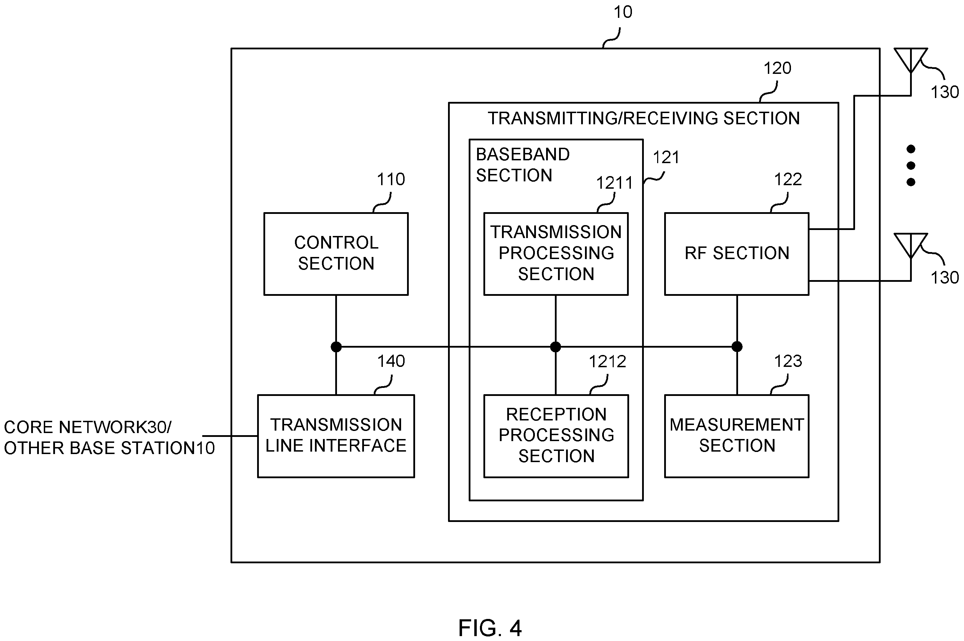

FIG. 4 is a diagram to show an example of a structure of the base station according to one embodiment. The base station 10 includes a control section 110, a transmitting/receiving section 120, transmitting/receiving antennas 130 and a transmission line interface140. Note that the base station 10 may include one or more control sections 110, one or more transmitting/receiving sections 120, one or more transmitting/receiving antennas 130, and one or more transmission line interfaces 140.

Note that, the present example primarily shows functional blocks that pertain to characteristic parts of the present embodiment, and it is assumed that the base station 10 may include other functional blocks that are necessary for radio communication as well. Part of the processes of each section described below may be omitted.

The control section 110 controls the whole of the base station 10. The control section 110 can be constituted with a controller, a control circuit, or the like described based on general understanding of the technical field to which the present disclosure pertains.

The control section 110 may control generation of signals, scheduling (for example, resource allocation, mapping), and so on. The control section 110 may control transmission and reception, measurement and so on using the transmitting/receiving section 120, the transmitting/receiving antennas 130, and the transmission line interface 140. The control section 110 may generate data, control information, a sequence and so on to transmit as a signal, and forward the generated items to the transmitting/receiving section 120. The control section 110 may perform call processing (setting up, releasing) for communication channels, manage the state of the base station 10, and manage the radio resources.

The transmitting/receiving section 120 may include a baseband section 121, an RF (Radio Frequency) section 122, and a measurement section 123. The baseband section 121 may include a transmission processing section 1211 and a reception processing section 1212. The transmitting/receiving section 120 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 120 may be structured as a transmitting/receiving section in one entity, or may be constituted with a transmitting section and a receiving section. The transmitting section may be constituted with the transmission processing section 1211, and the RF section 122. The receiving section may be constituted with the reception processing section 1212, the RF section 122, and the measurement section 123.

The transmitting/receiving antennas 130 can be constituted with antennas, for example, an array antenna, or the like described based on general understanding of the technical field to which the present disclosure pertains.

The transmitting/receiving section 120 may transmit the above-described downlink channel, synchronization signal, downlink reference signal, and so on. The transmitting/receiving section 120 may receive the above-described uplink channel, uplink reference signal, and so on.

The transmitting/receiving section 120 may form at least one of a transmission beam and a reception beam by using digital beam forming (for example, precoding), analog beam forming (for example, phase rotation), and so on.

The transmitting/receiving section 120 (transmission processing section 1211) may perform the processing of the PDCP (Packet Data Convergence Protocol) layer, the processing of the RLC (Radio Link Control) layer (for example, RLC retransmission control), the processing of the MAC (Medium Access Control) layer (for example, HARQ retransmission control), and so on, for example, on data and control information and so on acquired from the control section 110, and may generate bit string to transmit.

The transmitting/receiving section 120 (transmission processing section 1211) may perform transmission processing such as channel coding (which may include error correction coding), modulation, mapping, filtering, discrete Fourier transform (DFT) processing (as necessary), inverse fast Fourier transform (IFFT) processing, precoding, digital-to-analog conversion, and so on, on the bit string to transmit, and output a baseband signal.

The transmitting/receiving section 120 (RF section 122) may perform modulation to a radio frequency band, filtering, amplification, and so on, on the baseband signal, and transmit the signal of the radio frequency band through the transmitting/receiving antennas 130.

On the other hand, the transmitting/receiving section 120 (RF section 122) may perform amplification, filtering, demodulation to a baseband signal, and so on, on the signal of the radio frequency band received by the transmitting/receiving antennas 130.

The transmitting/receiving section 120 (reception processing section 1212) may apply reception processing such as analog-digital conversion, fast Fourier transform (FFT) processing, inverse discrete Fourier transform (IDFT) processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 120 (measurement section 123) may perform the measurement related to the received signal. For example, the measurement section 123 may perform RRM (Radio Resource Management) measurement, CSI (Channel State Information) measurement, and so on, based on the received signal. The measurement section 123 may measure a received power (for example, RSRP (Reference Signal Received Power)), a received quality (for example, RSRQ (Reference Signal Received Quality), an SINR (Signal to Interference plus Noise Ratio), an SNR (Signal to Noise Ratio)), a signal strength (for example, RSSI (Received Signal Strength Indicator)), channel information (for example, CSI), and so on. The measurement results may be output to the control section 110.

The transmission line interface 140 may perform transmission/reception (backhaul signaling) of a signal with an apparatus included in the core network 30 or other base stations 10, and so on, and acquire or transmit user data (user plane data), control plane data, and so on for the user terminal 20.

Note that the transmitting section and the receiving section of the base station 10 in the present disclosure may be constituted with at least one of the transmitting/receiving section 120, the transmitting/receiving antennas 130, and the transmission line interface 140.

Note that the transmitting/receiving section 120 may transmit various kinds of higher-layer parameters. The transmitting/receiving section 120 may transmit various kinds of DCI.

### (User Terminal)

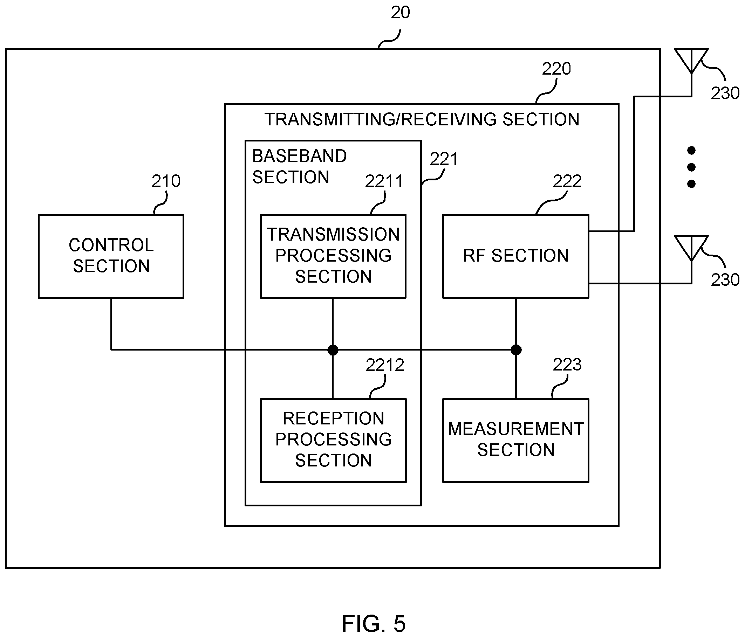

FIG. 5 is a diagram to show an example of a structure of the user terminal according to one embodiment. The user terminal 20 includes a control section 210, a transmitting/receiving section 220, and transmitting/receiving antennas 230. Note that the user terminal 20 may include one or more control sections 210, one or more transmitting/receiving sections 220, and one or more transmitting/receiving antennas 230.

Note that, the present example primarily shows functional blocks that pertain to characteristic parts of the present embodiment, and it is assumed that the user terminal 20 may include other functional blocks that are necessary for radio communication as well. Part of the processes of each section described below may be omitted.

The control section 210 controls the whole of the user terminal 20. The control section 210 can be constituted with a controller, a control circuit, or the like described based on general understanding of the technical field to which the present disclosure pertains.

The control section 210 may control generation of signals, mapping, and so on. The control section 210 may control transmission/reception, measurement and so on using the transmitting/receiving section 220, and the transmitting/receiving antennas 230. The control section 210 generates data, control information, a sequence and so on to transmit as a signal, and may forward the generated items to the transmitting/receiving section 220.

The transmitting/receiving section 220 may include a baseband section 221, an RF section 222, and a measurement section 223. The baseband section 221 may include a transmission processing section 2211 and a reception processing section 2212. The transmitting/receiving section 220 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 220 may be constituted as a transmitting/receiving section in one entity, or may be constituted with a transmitting section and a receiving section. The transmitting section may be constituted with the transmission processing section 2211, and the RF section 222. The receiving section may be constituted with the reception processing section 2212, the RF section 222, and the measurement section 223.

The transmitting/receiving antennas 230 can be constituted with antennas, for example, an array antenna, or the like described based on general understanding of the technical field to which the present disclosure pertains.

The transmitting/receiving section 220 may receive the above-described downlink channel, synchronization signal, downlink reference signal, and so on. The transmitting/receiving section 220 may transmit the above-described uplink channel, uplink reference signal, and so on.

The transmitting/receiving section 220 may form at least one of a transmission beam and a reception beam by using digital beam forming (for example, precoding), analog beam forming (for example, phase rotation), and so on.

The transmitting/receiving section 220 (transmission processing section 2211) may perform the processing of the PDCP layer, the processing of the RLC layer (for example, RLC retransmission control), the processing of the MAC layer (for example, HARQ retransmission control), and so on, for example, on data and control information and so on acquired from the control section 210, and may generate bit string to transmit.

The transmitting/receiving section 220 (transmission processing section 2211) may perform transmission processing such as channel coding (which may include error correction coding), modulation, mapping, filtering, DFT processing (as necessary), IFFT processing, precoding, digital-to-analog conversion, and so on, on the bit string to transmit, and output a baseband signal.

Note that, whether to apply DFT processing or not may be based on the configuration of the transform precoding. The transmitting/receiving section 220 (transmission processing section 2211) may perform, for a given channel (for example, PUSCH), the DFT processing as the above-described transmission processing to transmit the channel by using a DFT-s-OFDM waveform if transform precoding is enabled, and otherwise, does not need to perform the DFT processing as the above-described transmission process.

The transmitting/receiving section 220 (the RF section 222) may perform modulation to a radio frequency band, filtering, amplification, and so on, on the baseband signal, and transmit the signal of the radio frequency band through the transmitting/receiving antennas 230.

On the other hand, the transmitting/receiving section 220 (the RF section 222) may perform amplification, filtering, demodulation to a baseband signal, and so on, on the signal of the radio frequency band received by the transmitting/receiving antennas 230.

The transmitting/receiving section 220 (reception processing section 2212) may apply a receiving process such as analog-digital conversion, FFT processing, IDFT processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 220 (the measurement section 223) may perform the measurement related to the received signal. For example, the measurement section 223 may perform RRM measurement, CSI measurement, and so on, based on the received signal. The measurement section 223 may measure a received power (for example, RSRP), a received quality (for example, RSRQ, SINR, SNR), a signal strength (for example, RSSI), channel information (for example, CSI), and so on. The measurement results may be output to the control section 210.

Note that the transmitting section and the receiving section of the user terminal 20 in the present disclosure may be constituted with at least one of the transmitting/receiving section 220, the transmitting/receiving antennas 230, and the transmission line interface 240.

Note that the transmitting/receiving section 220 may receive various kinds of higher-layer parameters. The transmitting/receiving section 220 may receive various kinds of DCI.

Specifically, the transmitting/receiving section 220 may receive a higher-layer parameter for the first-type configured grant-based transmission, the higher-layer parameter being configured in no relation to a higher-layer parameter for dynamic grant-based transmission.

The transmitting/receiving section 220 may receive a higher-layer parameter for second-type configured grant-based transmission, the higher-layer parameter being configured in relation to the higher-layer parameter for the dynamic grant-based transmission.

The transmitting/receiving section 220 may receive the higher-layer parameter for the dynamic grant-based transmission.

The control section 210 may control the first-type configured grant-based transmission, based on the higher-layer parameter for the first-type configured grant-based transmission.

The control section 210 may control the second-type configured grant-based transmission, based on the higher-layer parameter for the second-type configured grant-based transmission.

The control section 210 may control the second-type configured grant-based transmission, based on the higher-layer parameter for the dynamic grant-based transmission.

The control section 210 may control the first-type configured grant-based transmission, based on the higher-layer parameter for the first-type configured grant-based transmission when the first-type configured grant-based transmission is initial transmission.

The control section 210 may control the first-type configured grant-based transmission, based on the higher-layer parameter for the dynamic grant-based transmission when the first-type configured grant-based transmission is retransmission.

### (Hardware Structure)

Note that the block diagrams that have been used to describe the above embodiments show blocks in functional units. These functional blocks (components) may be implemented in arbitrary combinations of at least one of hardware and software. Also, the method for implementing each functional block is not particularly limited. That is, each functional block may be realized by one piece of apparatus that is physically or logically coupled, or may be realized by directly or indirectly connecting two or more physically or logically separate pieces of apparatus (for example, via wire, wireless, or the like) and using these plurality of pieces of apparatus. The functional blocks may be implemented by combining softwares into the apparatus described above or the plurality of apparatuses described above.

Here, functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but function are by no means limited to these. For example, functional block (components) to implement a function of transmission may be referred to as a "transmitting section (transmitting unit)," a "transmitter," and the like. The method for implementing each component is not particularly limited as described above.

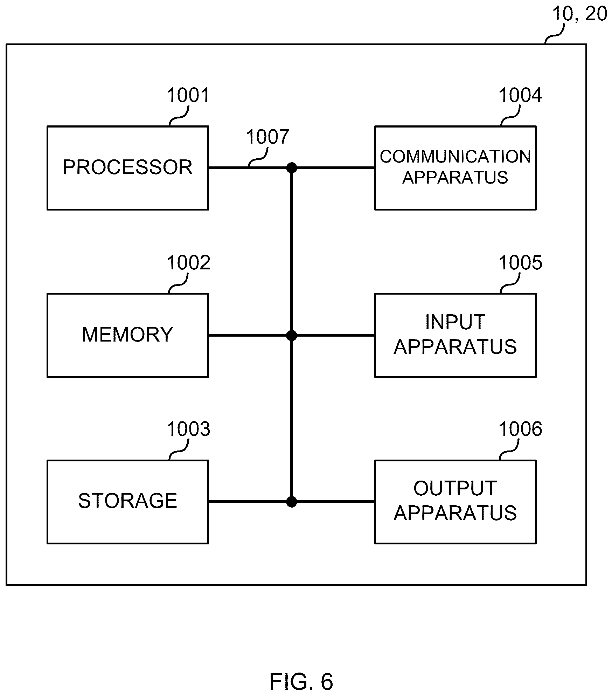

For example, a base station, a user terminal, and so on according to one embodiment of the present disclosure may function as a computer that executes the processes of the radio communication method of the present disclosure. FIG. 6 is a diagram to show an example of a hardware structure of the base station and the user terminal according to one embodiment. Physically, the above-described base station 10 and user terminal 20 may each be formed as computer an apparatus that includes a processor 1001, a memory 1002, a storage 1003, a communication apparatus 1004, an input apparatus 1005, an output apparatus 1006, a bus 1007, and so on.

Note that in the present disclosure, the words such as an apparatus, a circuit, a device, a section, a unit, and so on can be interchangeably interpreted. The hardware structure of the base station 10 and the user terminal 20 may be configured to include one or more of apparatuses shown in the drawings, or may be configured not to include part of apparatuses.

For example, although only one processor 1001 is shown, a plurality of processors may be provided. Furthermore, processes may be implemented with one processor or may be implemented at the same time, in sequence, or in different manners with two or more processors. Note that the processor 1001 may be implemented with one or more chips.

Each function of the base station 10 and the user terminals 20 is implemented, for example, by allowing given software (programs) to be read on hardware such as the processor 1001 and the memory 1002, and by allowing the processor 1001 to perform calculations to control communication via the communication apparatus 1004 and control at least one of reading and writing of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on. For example, at least part of the above-described control section 110 (210), the transmitting/receiving section 120 (220), and so on may be implemented by the processor 1001.

Furthermore, the processor 1001 reads programs (program codes), software modules, data, and so on from at least one of the storage 1003 and the communication apparatus 1004, into the memory 1002, and executes various processes according to these. As for the programs, programs to allow computers to execute at least part of the operations of the above-described embodiments are used. For example, the control section 110 (210) may be implemented by control programs that are stored in the memory 1002 and that operate on the processor 1001, and other functional blocks may be implemented likewise.

The memory 1002 is a computer-readable recording medium, and may be constituted with, for example, at least one of a ROM (Read Only Memory), an EPROM (Erasable Programmable ROM), an EEPROM (Electrically EPROM), a RAM (Random Access Memory), and other appropriate storage media. The memory 1002 may be referred to as a "register," a "cache," a "main memory (primary storage apparatus)" and so on. The memory 1002 can store executable programs (program codes), software modules, and the like for implementing the radio communication method according to one embodiment of the present disclosure.

The storage 1003 is a computer-readable recording medium, and may be constituted with, for example, at least one of a flexible disk, a floppy (registered trademark) disk, a magneto-optical disk (for example, a compact disc (CD-ROM (Compact Disc ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, and other appropriate storage media. The storage 1003 may be referred to as "secondary storage apparatus."

The communication apparatus 1004 is hardware (transmitting/receiving device) for allowing inter-computer communication via at least one of wired and wireless networks, and may be referred to as, for example, a "network device," a "network controller," a "network card," a "communication module," and so on. The communication apparatus 1004 may be configured to include a high frequency switch, a duplexer, a filter, a frequency synthesizer, and so on in order to realize, for example, at least one of frequency division duplex (FDD) and time division duplex (TDD). For example, the above-described transmitting/receiving section 120 (220), the transmitting/receiving antennas 130 (230), and so on may be implemented by the communication apparatus 1004. In the transmitting/receiving section 120 (220), the transmitting section 120a (220a) and the receiving section 120b (220b) can be implemented while being separated physically or logically.

The input apparatus 1005 is an input device that receives input from the outside (for example, a keyboard, a mouse, a microphone, a switch, a button, a sensor, and so on). The output apparatus 1006 is an output device that allows sending output to the outside (for example, a display, a speaker, an LED (Light Emitting Diode) lamp, and so on). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between pieces of apparatus.

Also, the base station 10 and the user terminals 20 may be structured to include hardware such as a microprocessor, a digital signal processor (DSP), an ASIC (Application-Specific Integrated Circuit), a PLD (Programmable Logic Device), an FPGA (Field Programmable Gate Array), and so on, and part or all of the functional blocks may be implemented by the hardware. For example, the processor 1001 may be implemented with at least one of these pieces of hardware.

### (Variations)

Note that the terminology described in the present disclosure and the terminology that is needed to understand the present disclosure may be replaced by other terms that convey the same or similar meanings. For example, a "channel," a "symbol," and a "signal" (or signaling) may be interchangeably interpreted. Also, "signals" may be "messages." A reference signal may be abbreviated as an "RS," and may be referred to as a "pilot," a "pilot signal," and so on, depending on which standard applies. Furthermore, a "component carrier (CC)" may be referred to as a "cell," a "frequency carrier," a "carrier frequency" and so on.

A radio frame may be constituted of one or a plurality of periods (frames) in the time domain. Each of one or a plurality of periods (frames) constituting a radio frame may be referred to as a "subframe." Furthermore, a subframe may be constituted of one or a plurality of slots in the time domain. A subframe may be a fixed time length (for example, 1 ms) independent of numerology.

Here, numerology may be a communication parameter applied to at least one of transmission and reception of a given signal or channel. For example, numerology may indicate at least one of a subcarrier spacing (SCS), a bandwidth, a symbol length, a cyclic prefix length, a transmission time interval (TTI), the number of symbols per TTI, a radio frame structure, a particular filter processing performed by a transceiver in the frequency domain, a particular windowing processing performed by a transceiver in the time domain, and so on.

A slot may be constituted of one or a plurality of symbols in the time domain (OFDM (Orthogonal Frequency Division Multiplexing) symbols, SC-FDMA (Single Carrier Frequency Division Multiple Access) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot." A mini-slot may be constituted of symbols less than the number of slots. A PDSCH (or PUSCH) transmitted in a time unit larger than a mini-slot may be referred to as "PDSCH (PUSCH) mapping type A." A PDSCH (or PUSCH) transmitted using a mini-slot may be referred to as "PDSCH (PUSCH) mapping type B."

A radio frame, a subframe, a slot, a mini-slot, and a symbol all express time units in signal communication. A radio frame, a subframe, a slot, a mini-slot, and a symbol may each be called by other applicable terms. Note that time units such as a frame, a subframe, a slot, mini-slot, and a symbol in the present disclosure may be interchangeably interpreted.

For example, one subframe may be referred to as a "TTI," a plurality of consecutive subframes may be referred to as a "TTI," or one slot or one mini-slot may be referred to as a "TTI." That is, at least one of a subframe and a TTI may be a subframe (1 ms) in existing LTE, may be a shorter period than 1 ms (for example, 1 to 13 symbols), or may be a longer period than 1 ms. Note that a unit expressing TTI may be referred to as a "slot," a "mini-slot," and so on instead of a "subframe."

Here, a TTI refers to the minimum time unit of scheduling in radio communication, for example. For example, in LTE systems, a base station schedules the allocation of radio resources (such as a frequency bandwidth and transmission power that are available for each user terminal) for the user terminal in TTI units. Note that the definition of TTIs is not limited to this.

TTIs may be transmission time units for channel-encoded data packets (transport blocks), code blocks, or codewords, or may be the unit of processing in scheduling, link adaptation, and so on. Note that, when TTIs are given, the time interval (for example, the number of symbols) to which transport blocks, code blocks, codewords, or the like are actually mapped may be shorter than the TTIs.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in 3GPP Rel. 8 to Rel. 12), a "long TTI," a "normal subframe," a "long subframe," a "slot" and so on. A TTI that is shorter than a normal TTI may be referred to as a "shortened TTI," a "short TTI," a "partial or fractional TTI," a "shortened subframe," a "short subframe," a "mini-slot," a "sub-slot," a "slot" and so on.

Note that a long TTI (for example, a normal TTI, a subframe, and so on) may be interpreted as a TTI having a time length exceeding 1 ms, and a short TTI (for example, a shortened TTI and so on) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of numerology, and, for example, may be 12. The number of subcarriers included in an RB may be determined based on numerology.

Also, an RB may include one or a plurality of symbols in the time domain, and may be one slot, one mini-slot, one subframe, or one TTI in length. One TTI, one subframe, and so on each may be constituted of one or a plurality of resource blocks.

Note that one or a plurality of RBs may be referred to as a "physical resource block (PRB (Physical RB))," a "sub-carrier group (SCG)," a "resource element group (REG),"a "PRB pair," an "RB pair" and so on.

Furthermore, a resource block may be constituted of one or a plurality of resource elements (REs). For example, one RE may correspond to a radio resource field of one subcarrier and one symbol.

A bandwidth part (BWP) (which may be referred to as a "fractional bandwidth," and so on) may represent a subset of contiguous common resource blocks (common RBs) for certain numerology in a certain carrier. Here, a common RB may be specified by an index of the RB based on the common reference point of the carrier. A PRB may be defined by a certain BWP and may be numbered in the BWP.

The BWP may include a BWP for the UL (UL BWP) and a BWP for the DL (DL BWP). One or a plurality of BWPs may be configured in one carrier for a UE.

At least one of configured BWPs may be active, and a UE does not need to assume to transmit/receive a given signal/channel outside active BWPs. Note that a "cell," a "carrier," and so on in the present disclosure may be interpreted as a "BWP."

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

Also, the information, parameters, and so on described in the present disclosure may be represented in absolute values or in relative values with respect to given values, or may be represented in another corresponding information. For example, radio resources may be indicated by given indices.

The names used for parameters and so on in the present disclosure are in no respect limiting. Furthermore, mathematical expressions that use these parameters, and so on may be different from those expressly disclosed in the present disclosure. For example, since various channels (PUCCH (Physical Uplink Control Channel), PDCCH (Physical Downlink Control Channel), and so on) and information elements can be identified by any suitable names, the various names allocated to these various channels and information elements are in no respect limiting.

The information, signals, and so on described in the present disclosure may be represented by using any of a variety of different technologies. For example, data, instructions, commands, information, signals, bits, symbols, chips, and so on, all of which may be referenced throughout the herein-contained description, may be represented by voltages, currents, electromagnetic waves, magnetic fields or particles, optical fields or photons, or any combination of these.

Also, information, signals, and so on can be output in at least one of from higher layers to lower layers and from lower layers to higher layers. Information, signals, and so on may be input and/or output via a plurality of network nodes.

The information, signals, and so on that are input and/or output may be stored in a specific location (for example, a memory) or may be managed by using a management table. The information, signals, and so on to be input and/or output can be overwritten, updated, or appended. The information, signals, and so on that are output may be deleted. The information, signals, and so on that are input may be transmitted to another apparatus.

Reporting of information is by no means limited to the aspects/embodiments described in the present disclosure, and other methods may be used as well. For example, reporting of information in the present disclosure may be implemented by using physical layer signaling (for example, downlink control information (DCI), uplink control information (UCI), higher layer signaling (for example, RRC (Radio Resource Control) signaling, broadcast information (master information block (MIB), system information blocks (SIBs), and so on), MAC (Medium Access Control) signaling and so on), and other signals or combinations of these.

Note that physical layer signaling may be referred to as "L1/L2 (Layer 1/Layer 2) control information (L1/L2 control signals)," "L1 control information (L1 control signal)," and so on. Also, RRC signaling may be referred to as an "RRC message," and can be, for example, an RRC connection setup message, an RRC connection reconfiguration message, and so on. Also, MAC signaling may be reported using, for example, MAC control elements (MAC CEs).

Also, reporting of given information (for example, reporting of "X holds") does not necessarily have to be reported explicitly, and can be reported implicitly (by, for example, not reporting this given information or reporting another piece of information).

Determinations may be made in values represented by one bit (0 or 1), may be made in Boolean values that represent true or false, or may be made by comparing numerical values (for example, comparison against a given value).

Software, whether referred to as "software," "firmware," "middleware," "microcode," or "hardware description language," or called by other terms, should be interpreted broadly to mean instructions, instruction sets, code, code segments, program codes, programs, subprograms, software modules, applications, software applications, software packages, routines, subroutines, objects, executable files, execution threads, procedures, functions, and so on.

Also, software, commands, information, and so on may be transmitted and received via communication media. For example, when software is transmitted from a website, a server, or other remote sources by using at least one of wired technologies (coaxial cables, optical fiber cables, twisted-pair cables, digital subscriber lines (DSL), and so on) and wireless technologies (infrared radiation, microwaves, and so on), at least one of these wired technologies and wireless technologies are also included in the definition of communication media.

The terms "system" and "network" used in the present disclosure can be used interchangeably. The "network" may mean an apparatus (for example, a base station) included in the network.

In the present disclosure, the terms such as "precoding," a "precoder," a "weight (precoding weight), " "quasi-co-location (QCL)," a "TCI state (Transmission Configuration Indication state)," a "spatial relation," a "spatial domain filter," a "transmission power," "phase rotation," an "antenna port," an "antenna port group," a "layer," "the number of layers," a "rank," a "resource," a "resource set," a "resource group," a "beam," a "beam width," a "beam angular degree," an "antenna," an "antenna element," a "panel," and so on can be used interchangeably.

In the present disclosure, the terms such as a "base station (BS)," a "radio base station," a "fixed station," a "NodeB," an "eNodeB (eNB)," a "gNodeB (gNB)," an "access point," a "transmission point (TP)," a "reception point (RP)," a "transmission/reception point (TRP)," a "panel," a "cell," a "sector," a "cell group," a "carrier," a "component carrier," and so on can be used interchangeably. The base station may be referred to as the terms such as a "macro cell," a small cell," a "femto cell," a "pico cell," and so on.

A base station can accommodate one or a plurality of (for example, three) cells. When a base station accommodates a plurality of cells, the entire coverage area of the base station can be partitioned into multiple smaller areas, and each smaller area can provide communication services through base station subsystems (for example, indoor small base stations (RRHs (Remote Radio Heads))). The term "cell" or "sector" refers to part of or the entire coverage area of at least one of a base station and a base station subsystem that provides communication services within this coverage.

In the present disclosure, the terms "mobile station (MS)," "user terminal," "user equipment (UE)," and "terminal" may be used interchangeably.

A mobile station may be referred to as a "subscriber station," "mobile unit," "subscriber unit," "wireless unit," "remote unit," "mobile device," "wireless device," "wireless communication device," "remote device," "mobile subscriber station," "access terminal," "mobile terminal," "wireless terminal," "remote terminal," "handset," "user agent," "mobile client," "client," or some other appropriate terms in some cases.

At least one of a base station and a mobile station may be referred to as a "transmitting apparatus," a "receiving apparatus," a "radio communication apparatus," and so on. Note that at least one of a base station and a mobile station may be device mounted on a mobile body or a mobile body itself, and so on. The mobile body may be a vehicle (for example, a car, an airplane, and the like), may be a mobile body which moves unmanned (for example, a drone, an automatic operation car, and the like), or may be a robot (a manned type or unmanned type). Note that at least one of a base station and a mobile station also includes an apparatus which does not necessarily move during communication operation. For example, at least one of a base station and a mobile station may be an IoT (Internet of Things) device such as a sensor, and the like.

Furthermore, the base station in the present disclosure may be interpreted as a user terminal. For example, each aspect/embodiment of the present disclosure may be applied to the structure that replaces a communication between a base station and a user terminal with a communication between a plurality of user terminals (for example, which may be referred to as "D2D (Device-to-Device)," "V2X (Vehicle-to-Everything)," and the like). In this case, user terminals 20 may have the functions of the base stations 10 described above. The words "uplink" and "downlink" may be interpreted as the words corresponding to the terminal-to-terminal communication (for example, "side"). For example, an uplink channel, a downlink channel and so on may be interpreted as a side channel.

Likewise, the user terminal in the present disclosure may be interpreted as base station. In this case, the base station 10 may have the functions of the user terminal 20 described above.

Actions which have been described in the present disclosure to be performed by a base station may, in some cases, be performed by upper nodes. In a network including one or a plurality of network nodes with base stations, it is clear that various operations that are performed to communicate with terminals can be performed by base stations, one or more network nodes (for example, MMEs (Mobility Management Entities), S-GW (Serving-Gateways), and so on may be possible, but these are not limiting) other than base stations, or combinations of these.

The aspects/embodiments illustrated in the present disclosure may be used individually or in combinations, which may be switched depending on the mode of implementation. The order of processes, sequences, flowcharts, and so on that have been used to describe the aspects/embodiments in the present disclosure may be reordered as long as inconsistencies do not arise. For example, although various methods have been illustrated in the present disclosure with various components of steps in exemplary orders, the specific orders that are illustrated herein are by no means limiting.

The aspects/embodiments illustrated in the present disclosure may be applied to LTE (Long Term Evolution), LTE-A (LTE-Advanced), LTE-B (LTE-Beyond), SUPER 3G, IMT-Advanced, 4G (4th generation mobile communication system), 5G (5th generation mobile communication system), FRA (Future Radio Access), New-RAT (Radio Access Technology), NR(New Radio), NX (New radio access), FX (Future generation radio access), GSM (registered trademark) (Global System for Mobile communications), CDMA 2000, UMB (Ultra Mobile Broadband), IEEE 802.11 (Wi-Fi (registered trademark)), IEEE 802.16 (WiMAX (registered trademark)), IEEE 802.20, UWB (Ultra-WideBand), Bluetooth (registered trademark), systems that use other adequate radio communication methods and next-generation systems that are enhanced based on these. A plurality of systems may be combined (for example, a combination of LTE or LTE-A and 5G, and the like) and applied.

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

Reference to elements with designations such as "first," "second," and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

The term "judging (determining)" as in the present disclosure herein may encompass a wide variety of actions. For example, "judging (determining)" may be interpreted to mean making "judgments (determinations)" about judging, calculating, computing, processing, deriving, investigating, looking up, search and inquiry (for example, searching a table, a database, or some other data structures), ascertaining, and so on.

Furthermore, "judging (determining)" may be interpreted to mean making "judgments (determinations)" about receiving (for example, receiving information), transmitting (for example, transmitting information), input, output, accessing (for example, accessing data in a memory), and so on.

In addition, "judging (determining)" as used herein may be interpreted to mean making "judgments (determinations)" about resolving, selecting, choosing, establishing, comparing, and so on. In other words, "judging (determining)" may be interpreted to mean making "judgments (determinations)" about some action.

In addition, "judging (determining)" may be interpreted as "assuming," "expecting," "considering," and the like.

"The maximum transmit power" according to the present disclosure may mean a maximum value of the transmit power, may mean the nominal maximum transmit power (the nominal UE maximum transmit power), or may mean the rated maximum transmit power (the rated UE maximum transmit power).

The terms "connected" and "coupled," or any variation of these terms as used in the present disclosure mean all direct or indirect connections or coupling between two or more elements, and may include the presence of one or more intermediate elements between two elements that are "connected" or "coupled" to each other. The coupling or connection between the elements may be physical, logical, or a combination thereof. For example, "connection" may be interpreted as "access."

In the present disclosure, when two elements are connected, the two elements may be considered "connected" or "coupled" to each other by using one or more electrical wires, cables and printed electrical connections, and, as some non-limiting and non-inclusive examples, by using electromagnetic energy having wavelengths in radio frequency regions, microwave regions, (both visible and invisible) optical regions, or the like.

In the present disclosure, the phrase "A and B are different" may mean that "A and B are different from each other." Note that the phrase may mean that "A and B is each different from C." The terms "separate," "be coupled," and so on may be interpreted similarly to "different."

When terms such as "include," "including," and variations of these are used in the present disclosure, these terms are intended to be inclusive, in a manner similar to the way the term "comprising" is used. Furthermore, the term "or" as used in the present disclosure is intended to be not an exclusive disjunction.

For example, in the present disclosure, when an article such as "a," "an," and "the" in the English language is added by translation, the present disclosure may include that a noun after these articles is in a plural form.

Now, although the invention according to the present disclosure has been described in detail above, it should be obvious to a person skilled in the art that the invention according to the present disclosure is by no means limited to the embodiments described in the present disclosure. The invention according to the present disclosure can be implemented with various corrections and in various modifications, without departing from the spirit and scope of the invention defined by the recitations of claims. Consequently, the description of the present disclosure is provided only for the purpose of explaining examples, and should by no means be construed to limit the invention according to the present disclosure in any way.

## Claims

1. A user terminal comprising:
a receiving section that receives a higher-layer parameter for first-type configured grant-based transmission, the higher-layer parameter being configured independently from a higher-layer parameter for dynamic grant-based transmission; and
a control section that controls the first-type configured grant-based transmission, based on the higher-layer parameter for the first-type configured grant-based transmission.

2. The user terminal according to claim 1, wherein
the receiving section receives a higher-layer parameter for second-type configured grant-based transmission, the higher-layer parameter being configured in relation to the higher-layer parameter for the dynamic grant-based transmission, and
the control section controls the second-type configured grant-based transmission, based on the higher-layer parameter for the second-type configured grant-based transmission.

3. The user terminal according to claim 1, wherein
the receiving section receives the higher-layer parameter for the dynamic grant-based transmission, and
the control section controls second-type configured grant-based transmission, based on the higher-layer parameter for the dynamic grant-based transmission.

4. The user terminal according to any one of claims 1 to 3, wherein
the control section controls the first-type configured grant-based transmission, based on the higher-layer parameter for the first-type configured grant-based transmission when the first-type configured grant-based transmission is initial transmission.

5. The user terminal according to any one of claims 1 to 4, wherein
the control section controls the first-type configured grant-based transmission, based on the higher-layer parameter for the dynamic grant-based transmission when the first-type configured grant-based transmission is retransmission.

6. A radio communication method comprising:
receiving a higher-layer parameter for first-type configured grant-based transmission, the higher-layer parameter being configured independently from a higher-layer parameter for dynamic grant-based transmission; and
controlling the first-type configured grant-based transmission, based on the higher-layer parameter for the first-type configured grant-based transmission.
